# EUROPEAN PATENT SPECIFICATION

(11) **EP 3 334 089 B1**
(45) Date of publication and mention of the grant of the patent: **09.10.2019**
(21) Application number: 15902544.4
(22) Date of filing: 31.08.2015
(51) Int. Cl.: H04L 12/24

(54) **METHOD AND DEVICE FOR ONBOARDING NETWORK SERVICE DESCRIPTOR**
VERFAHREN UND VORRICHTUNG FÜR ONBOARDING EINES NETZWERKDIENSTDESKRIPTORS
PROCÉDÉ ET DISPOSITIF D'EMBARQUEMENT DE DESCRIPTEUR DE SERVICE RÉSEAU

(43) Date of publication of application: 13.06.2018
(73) Proprietor: Huawei Technologies Co., Ltd., Longgang District Shenzhen, Guangdong 518129 (CN)
(72) Inventor: XIA, Haitao, Shenzhen Guangdong 518129 (CN); YU, Fang, Shenzhen Guangdong 518129 (CN); LIU, Jianning, Shenzhen Guangdong 518129 (CN); YANG, Xu, Shenzhen Guangdong 518129 (CN)
(74) Representative: Thun, Clemens
(86) International application number: PCT/CN2015/088607
(87) International publication number: WO 2017/035737

(56) References cited:
- EP-A1- 2 518 941
- EP-A1- 2 911 347
- CN-A- 104 219 127
- CN-A- 104 639 361
- US-A1- 2014 317 261
- HP, Marc Flauw: "IFA009 Network Service per admin domain Use Case; NFVIFA(15)0001027_IFA009_Network_service_p er_admin_domain_Use_Case", ETSI Draft; NFVIFA(15)0001026r1_IFA009_Resource_Orches trator_Use_Case, 11 August 2015 (2015-08-11), pages 1-3, XP055475354, Retrieved from the Internet: URL:https://portal.etsi.org [retrieved on 2018-05-15]
- - European Telecommunications Standards Institute (etsi),: "Network Functions Virtualisation (NFV); Management and Orchestration", ETSI GS NFV-MAN 001 V1.1.1 (2014-12), 1 December 2014 (2014-12-01), pages 1-184, XP055366912, Retrieved from the Internet: URL:http://www.etsi.org/deliver/etsi_gs/NF V-MAN/001_099/001/01.01.01_60/gs_NFV-MAN00 1v010101p.pdf [retrieved on 2017-04-24]
- HUAWEI TECHNOLOGIES CO LTD: "IFA020_cross-domain NSD_on_boarding", ETSI DRAFT; NFVIFA(16)000932R2, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG - NFV IFA - Interfaces and Architecture 5 July 2016 (2016-07-05), pages 1-3, XP014276692, Retrieved from the Internet: URL:docbox.etsi.org\ISG\NFV\IFA\05-CONTRIB UTIONS\2016\NFVIFA(16)000932r2_IFA020_cros s-domain_NSD_on_boarding.docx [retrieved on 2016-07-05]
- CSOMA ATTILA ET AL: 'Multi-layered service orchestration in a multi-domain network environment' THIRD EUROPEAN WORKSHOP ON SOFTWARE-DEFINED NETWORKS, IEEE 01 September 2014, XP032703402

## Description

### TECHNICAL FIELD

The present invention relates to the field of network communications technologies, and in particular, to a method and an apparatus for on-boarding a network service descriptor.

### BACKGROUND

Network Function Virtualization (Network Function Virtualization, NFV) is a technology in which a telecommunication network operator implements some of telecommunication network functions by using a general server, router, and memory with reference to a network virtualization technology in the field of Internet technology (Internet Technology, IT). To implement the technology, the telecommunication network functions need to be implemented in a software manner. Software and hardware are decoupled, and the functions can run on hardware such as the general server, router, and memory. Meanwhile, operations such as instantiation, flexible scaling, and migration of a network service (Network Service, NS) or a virtualized network function (Virtualized Network Function, VNF) are automatically performed as required.

An existing NFV system includes a VNF, an NFV infrastructure (NFV Infrastructure, NFVI), and management and orchestration (Management and Orchestration, MANO). The MANO includes a virtualized infrastructure manager (Virtualized Infrastructure Manager, VIM), an NFV orchestrator (NFV Orchestrator, NFVO), and a VNF manager (VNF Manager, VNFM). The NFVO is responsible for life cycle management on an NS, and orchestrates and manages virtualized resources (including a hardware resource and a software resource) of the entire NFV system.

A process of on-boarding a network service descriptor (Network Service Descriptor, NSD) means registering the NS in a network service catalog (Network Service Catalog, NS Catalog), to ensure that the NSD and VNF packet information forming the NS are available in the catalog. By means of research, it is found that, the method for on-boarding an NSD in the prior art is suitable only for NS deployment in a single NFVO management domain, or in other words, NS deployment in a same NFVO management domain.

For example, the prior art document HP, Marc Flauw "IFA009 Network Service per admin domain use case, ETSI draft, 11. August 2015 refers to a management of network service templates and VNF packages by on-boarding new network services and VNF packages.

Further, EP 2 518 941 A1 refers to methods, computers and communication systems for controlling services across multiple heterogeneous networks, which may include receiving a service request, identifying two or more telecommunications domains required to fulfill the received service request, generating two or more domain specific service requests based on the received service request, associating at least one of the generated plurality of domain specific service requests with one of the identified telecommunications domains, and sending the associated domain specific service requests to exposed public interfaces of the associated telecommunications domains. A component in the telecommunications domain may receive the domain specific service request, decompose the request into resource rule(s), and send the resource rule(s) to a relevant component within the associated telecommunications domain for enforcement.

Further, prior art document European Telecommunications Standards Institute (etsi): "Network Functions Virtualization (NFV); Management and Orchestration", ETSI GS NFV-MAN 001 VI.1.1, 2014-12-01 refers to a management and orchestration framework required for the provisioning of virtualized network functions, VNF, and related operations, such as the configuration of the virtualized network functions and the infrastructure.

### SUMMARY

In view of this, the present invention provides a method and an apparatus for on-boarding a network service descriptor, so as to be applicable to NS deployment across NFVO management domains. Specific solutions thereof are as follows:
In a first aspect a method for on-boarding a network service descriptor is provided, wherein the method comprises:
- receiving, by a primary orchestrator, a cross-domain network service descriptor, NSD, on-boarding command from a sender,
- determining, by the primary orchestrator, according to the cross-domain NSD on-boarding command an NSD identifier that corresponds to a management domain of a secondary orchestrator,
   determining, by the primary orchestrator, according to the cross-domain NSD on-boarding command, a virtualized network function, VNF, packet identifier that corresponds to the management domain of the secondary orchestrator,
   wherein by the determination of the NSD identifier corresponding to the management domain of the secondary orchestrator together with the determination of the VNF packet identifier corresponding to the management domain of the secondary orchestrator it is determined that the secondary orchestrator needs to on-board the NSD corresponding to the management domain of the secondary orchestrator,
- sending, by the primary orchestrator, to the secondary orchestrator a NSD on-boarding command carrying the determined NSD identifier and the determined VNF packet identifier that correspond to the management domain of the secondary orchestrator, wherein the NSD on-boarding command is used to instruct the secondary orchestrator to on-board the NSD corresponding to the NDS identifier,
   wherein a management domain of the primary orchestrator is different from the management domain of the secondary orchestrator.

In a first implementation form of the first aspect the method further comprises:
determining, by the primary orchestrator, according to the cross-domain NSD on-boarding command that the primary orchestrator needs to on-board an NSD corresponding to the management domain of the primary orchestrator.

In a second implementation form of the first aspect, after the sending the NSD on-boarding command to the secondary orchestrator, the method further comprises:
receiving an NSD on-boarding complete notification message fed back by the secondary orchestrator; and
after the NSD corresponding to the management domain of the primary orchestrator is on-boarded, sending a cross-domain NSD on-boarding complete notification message to the sender.

In a third implementation form of the first aspect the primary orchestrator is a network function virtualization orchestrator or a network service orchestrator, and the secondary orchestrator is a network function virtualization orchestrator or a network service orchestrator.

In a second aspect an apparatus is provided for on-boarding a network service descriptor, wherein the apparatus is configured and intended to perform any of the above methods.

In a third aspect a computer readable storage medium is provided storing a program to be executed by a processor, the program comprising instructions, which when executed by the processor, cause the processor to carry out the above methods.

It can be learned from the foregoing technical solutions that, according to the method and the apparatus for on-boarding a network service descriptor of this application, the primary orchestrator receives the cross-domain network service descriptor NSD on-boarding command from the sender; the primary orchestrator determines, according to the cross-domain NSD on-boarding command, that the secondary orchestrator needs to on-board the NSD corresponding to the management domain of the secondary orchestrator; and the primary orchestrator sends the NSD on-boarding command to the secondary orchestrator, where the NSD on-boarding command is used to instruct the secondary orchestrator to on-board the NSD corresponding to the management domain of the secondary orchestrator, and the management domain of the primary orchestrator is different from the management domain of the secondary orchestrator. The method and the apparatus can be applied to NS deployment across NFVO management domains, so as to ensure consistency and reliability of an NSD on-boarding process in a scenario of NS deployment across NFVO management domains.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a detailed architecture of MANO;
FIG. 2 is a schematic architecture diagram of an NS deployed in different NFVO management domains;
FIG. 3 is a flowchart of Embodiment 1 of a method for on-boarding a network service descriptor NSD disclosed in the present invention;
FIG. 4 is a flowchart of Embodiment 2 of a method for on-boarding a network service descriptor NSD disclosed in the present invention;
FIG. 5 is a signaling diagram of a method for on-boarding a network service descriptor NSD disclosed in the present invention;
FIG. 6 is a flowchart of Embodiment 3 of a method for on-boarding a network service descriptor NSD disclosed in the present invention;
FIG. 7 is a flowchart of Embodiment 4 of a method for on-boarding a network service descriptor NSD disclosed in the present invention;
FIG. 8 is a signaling diagram of a method for on-boarding a network service descriptor NSD disclosed in the present invention;
FIG. 9 is a structural diagram of Embodiment 1 of an apparatus for on-boarding a network service descriptor NSD disclosed in the present invention;
FIG. 10 is a structural diagram of Embodiment 2 of an apparatus for on-boarding a network service descriptor NSD disclosed in the present invention;
FIG. 11 is a structural diagram of Embodiment 3 of an apparatus for on-boarding a network service descriptor NSD disclosed in the present invention;
FIG. 12 is a structural diagram of Embodiment 4 of an apparatus for on-boarding a network service descriptor NSD disclosed in the present invention; and
FIG. 13 is a structural diagram of an apparatus for on-boarding a network service descriptor NSD disclosed in this application.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the specification, claims, and the foregoing drawings, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

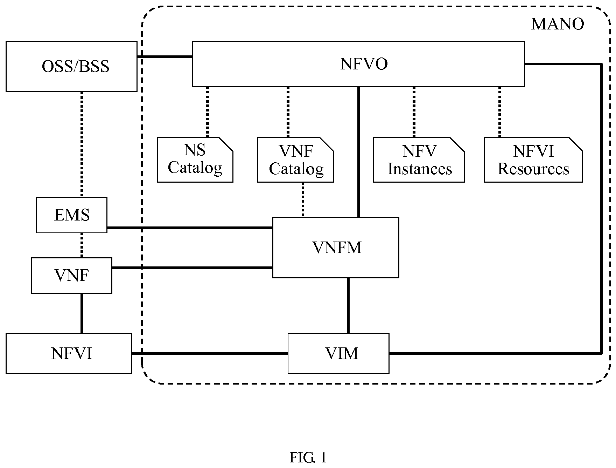

Currently, standardized work of NFV is focused on MANO functions. As shown in FIG. 1, FIG. 1 shows a detailed architecture of MANO, including a VIM, an NFVO, and a VNFM. The NFVO is responsible for life cycle management on an NS, and orchestrates and manages virtualized resources (including a hardware resource and a software resource) of the entire NFV system. In addition, the MANO further includes: an NS catalog, a VNF catalog (VNF Catalog), NFV instances (Instances), and NFVI resources (Resources). Optionally, the NS catalog and the VNF catalog are included in the NFVO. In the figure:
The NS catalog stores all on-boarded (on-board) NSD information.

The VNF catalog stores all on-board VNF packages (VNF Packages). Optionally, the VNF package includes a VNF descriptor (VNF Descriptor, VNFD) and a virtual machine image. An on-boarding process of the VNF package means registering the VNF package in the VNF catalog, to ensure that a metadata VNFD and a VNF image (VNF image) that forms the VNF packet are available in the catalog.

The NFV Instances store status information about instances such as all NSs and VNFs that are running, for example, an allocated network address and an operation record.

The NFVI Resources store status of all NFVI resources, including available, reserved, or allocated NFVI resources.

In actual NFV MANO application, a mapping exists between a management domain of the NFVO and a management domain of an operator network. For example, for an operator in a small or medium-sized country, one NFVO management domain may be mapped to nationwide networks of the operator; however, for an operator in a superpower such as China or America, one NFVO management domain may be mapped to only networks of the operator in a province.

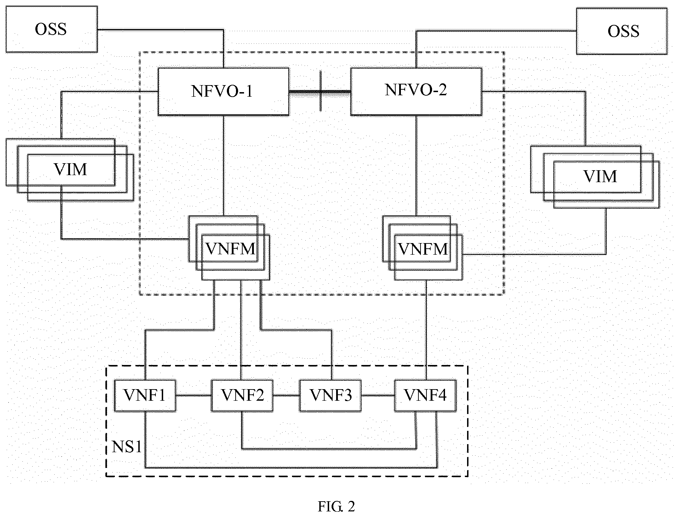

In some application scenarios, for example, when an NFV technology is used in an enterprise network of a global enterprise, or when a VNF in an inactive zone is selected to perform redundancy and backup for a VNF in an active zone of tsunamis and earthquakes (the active zone and the inactive zone usually cross different countries or different provinces), an NS needs to be deployed in different NFVO management domains. As shown in FIG. 2, two NFVOs (NFVO 1 and NFVO 2) of different management domains complete NS deployment across NFVO management domains by using a horizontal interface (a bold line between the NFVO 1 and NFVO 2 in FIG. 2). In the figure, a VNF 1, a VNF 2, a VNF 3, and a VNF 4 jointly form an NS 1, where the VNF 1 to VNF 3 are deployed in the management domain of the NFVO 1, and the VNF 4 is deployed in the management domain of the NFVO2.

The following describes the technical solution of this application by way of an embodiment.

For ease of description, in this embodiment of the present invention, a primary orchestrator and a secondary orchestrator are used as an example. However, based on the solution of this application, an application scenario in which there is a primary orchestrator and multiple secondary orchestrators also falls within the protection scope of this application. It should be noted that, the primary orchestrator and the secondary orchestrator separately manage different management domains. In addition, the primary orchestrator and the secondary orchestrator may be NFVOs, or network service orchestrators (Network Service Orchestrators, NSOs). An NSO is a sub-orchestrator that is obtained after an NFVO entity is split, and is responsible for management and orchestration of network services. Another sub-orchestrator that is obtained after the NFVO entity is split is a resource orchestrator (Resource Orchestrator, RO), which is mainly responsible for management and orchestration of virtual resources.

For example, both the primary orchestrator and the secondary orchestrator are NFVOs. As shown in FIG. 2, the NFVO 1 may be specified as the primary orchestrator, and the NFVO 2 may be specified as the secondary orchestrator. In the figure, the NS 1 includes four VNFs, that is, the VNF 1, the VNF 2, the VNF 3, and the VNF 4. Each VNF corresponds to a physical network function (Physical Network Function, PNF) in a conventional non-virtualized network, for example, a virtualized evolved packet core (Evolved Packet Core, EPC) node. Optionally, the EPC node is a mobility management entity (Mobile Management Entity, MME), a serving gateway (Serving Gate Way, SGW), or a public data network gateway (Public Data Network Gate Way, PGW). The VNF 1 to the VNF 3 are deployed in the management domain of the NFVO 1, and the VNF 4 is deployed in the management domain of the NFVO 2.

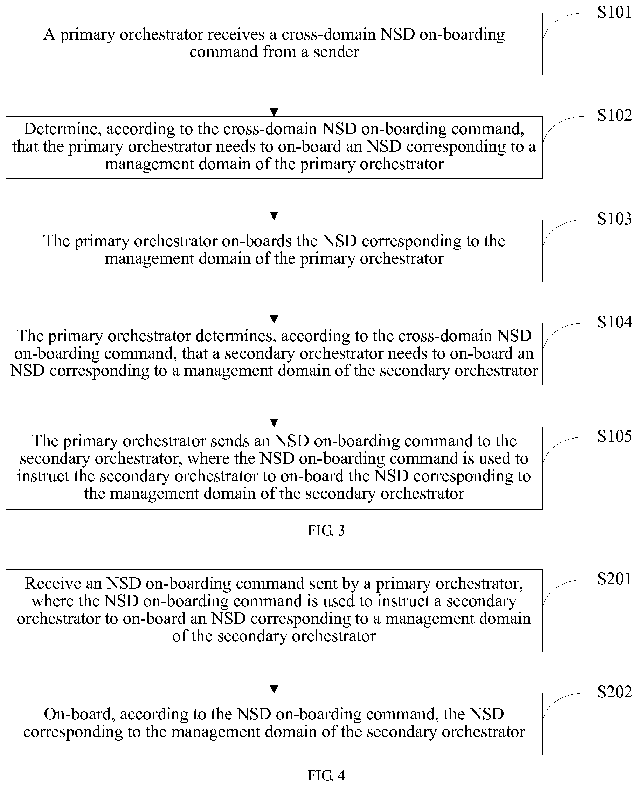

Referring to FIG. 3, FIG. 3 is a flowchart of Embodiment 1 of a method for on-boarding a network service descriptor NSD disclosed in the present invention. The method is applied to a primary orchestrator, and specifically includes the following steps:
S 101. The primary orchestrator receives a cross-domain NSD on-boarding command from a sender.

The sender includes, but is not limited to, an operation support system (Operation support system, OSS)/a business support system (Business support system, BSS) of an operator.

The cross-domain NSD on-boarding command carries NSD information for describing a network service NS and VNF information. Specifically, the NSD information is an NSD identifier, and the VNF information is a VNF package identifier.

S102. Determine, according to the cross-domain NSD on-boarding command, that the primary orchestrator needs to on-board an NSD corresponding to a management domain of the primary orchestrator.

Specifically, the NSD information (for example, the NSD identifier) and the VNF packet information (for example, the VNF packet identifier) that correspond to the management domain of the primary orchestrator may be determined from the cross-domain NSD on-boarding command, thereby determining, according to the NSD information and the VNF packet information, that the primary orchestrator needs to on-board the NSD corresponding to the management domain of the primary orchestrator.

S103. The primary orchestrator on-boards the NSD corresponding to the management domain of the primary orchestrator.

It should be noted that, the on-boarding, by the primary orchestrator, the NSD corresponding to the management domain of the primary orchestrator specifically includes:
checking, according to the NSD information corresponding to the management domain of the primary orchestrator, whether a corresponding element exists;
checking, according to the VNF packet information corresponding to the management domain of the primary orchestrator, whether a corresponding VNF packet exists;
checking, according to the VNF packet information corresponding to the management domain of the primary orchestrator, whether a corresponding VNFD includes a corresponding VNF external interface; and
when results of the three checks are all yes, notifying, by the primary orchestrator, an NSD catalog (catalog) to on-board the NSD into the catalog, where in this case, the primary orchestrator completes on-boarding the NSD corresponding to the management domain of the primary orchestrator.

When it is checked, according to the VNF packet information corresponding to the management domain of the primary orchestrator, that the VNF does not exist and/or it is checked, according to the VNF packet information corresponding to the management domain of the primary orchestrator, that the VNFD does not include the corresponding VNF external interface, the on-boarding, by the primary orchestrator, the NSD corresponding to the management domain of the primary orchestrator further includes: sending, by the primary orchestrator to the sender, an on-board acknowledge (Acknowledge) command with a failure cause indication, where the on-board acknowledge command is used to notify the sender that the VNF packet in the VNF in the management domain of the primary orchestrator does not exist; receiving, by the primary orchestrator, a VNF packet on-boarding command from the sender; and on-boarding, by the primary orchestrator according to the VNF packet on-boarding command, the VNF packet in the domain of the primary orchestrator. When on-boarding of the VNF packet is completed, it indicates that the primary orchestrator completes on-boarding the NSD corresponding to the management domain of the primary orchestrator.

It should be noted that, in this embodiment, the VNF packet on-boarding command carries a VNFD and software image (image) information of the VNF packet, the completing on-boarding the VNF packet according to the VNF packet on-boarding command specifically includes:
checking whether a mandatory element in the VNFD exists;
if the mandatory element in the VNFD exists, notifying a VNF packet to on-board the VNF packet into the catalog;
uploading the software image (image) of the VNF packet to a VIM;
receiving a notification that is returned by the VIM and that indicates that uploading of the software image (image) of the VNF packet is completed; and
returning notification information that a process of on-boarding the VNF packet is completed to the sender.

S104. The primary orchestrator determines, according to the cross-domain NSD on-boarding command, that a secondary orchestrator needs to on-board an NSD corresponding to a management domain of the secondary orchestrator.

Specifically, NSD information and VNF packet information that correspond to the management domain of the secondary orchestrator may be determined from the cross-domain NSD on-boarding command, thereby determining, according to the NSD information and the VNF packet information, that the secondary orchestrator needs to on-board the NSD corresponding to the management domain of the secondary orchestrator.

In an actual application, the primary orchestrator may decompose the NS into a sub-NS corresponding to the management domain of the secondary orchestrator. An NSD identifier and/or a VNF packet identifier that correspond/corresponds to the management domain of the secondary orchestrator is used to describe the sub-NS. The determining NSD information and VNF packet information that correspond to the management domain of the secondary orchestrator from the cross-domain NSD on-boarding command specifically includes: determining, according to the cross-domain NSD on-boarding command, the NSD identifier and/or the VNF packet identifier that correspond/corresponds to the management domain of the secondary orchestrator.

In addition, an NSD identifier used to describe the NS, an identifier of the primary orchestrator, a correspondence between an identifier used to describe a VNF packet of the NS and the identifier of the primary orchestrator, and/or a correspondence between the identifier used to describe the VNF packet of the NS and an identifier of the secondary orchestrator may also be determined from the cross-domain NSD on-boarding command, to serve as the NSD information and the VNF packet information that correspond to the management domain of the secondary orchestrator.

S105. The primary orchestrator sends an NSD on-boarding command to the secondary orchestrator, where the NSD on-boarding command is used to instruct the secondary orchestrator to on-board the NSD corresponding to the management domain of the secondary orchestrator.

The sending an NSD on-boarding command to the secondary orchestrator may specifically include: sending, to the secondary orchestrator, the NSD on-boarding command carrying the NSD information and the VNF packet information that correspond to the management domain of the secondary orchestrator.

It should further be noted that, after step S 105, the method further includes:
receiving an NSD on-boarding complete notification message fed back by the secondary orchestrator; and
after an NSD corresponding to the management domain of the primary orchestrator is on-boarded, sending a cross-domain NSD on-boarding complete notification message to the sender.

Referring to FIG. 4, FIG. 4 is a flowchart of Embodiment 2 of a method for on-boarding a network service descriptor NSD disclosed in the present invention. The method is applied to a secondary orchestrator, and specifically includes the following steps:
S201. Receive an NSD on-boarding command sent by a primary orchestrator.

The NSD on-boarding command is used to instruct the secondary orchestrator to on-board an NSD corresponding to a management domain of the secondary orchestrator.

The NSD on-boarding command carries NSD information and VNF packet information that correspond to the management domain of the secondary orchestrator. Specifically, the NSD on-boarding command carries an NSD identifier and/or a VNF packet identifier that correspond/corresponds to the management domain of the secondary orchestrator. Alternatively, the NSD on-boarding command carries an NSD identifier used to describe an NS, an identifier of the primary orchestrator, a correspondence between an identifier of a VNF packet used to describe the NS and the identifier of the primary orchestrator, and/or a correspondence between the identifier of the VNF packet used to describe the NS and an identifier of the secondary orchestrator.

S202. On-board, according to the NSD on-boarding command, the NSD corresponding to the management domain of the secondary orchestrator.

It should be noted that, the on-boarding, according to the NSD on-boarding command, the NSD corresponding to the management domain of the secondary orchestrator specifically includes:
checking, according to the NSD information corresponding to the management domain of the secondary orchestrator, whether a corresponding element exists;
checking, according to the VNF packet information corresponding to the management domain of the secondary orchestrator, whether a corresponding VNF packet exists; and
checking, according to the VNF packet information corresponding to the management domain of the secondary orchestrator, whether a corresponding VNFD includes a corresponding VNF external interface.

When results of the three checks are all yes, it indicates that on-boarding of the NSD corresponding to the management domain of the secondary orchestrator is completed.

When it is checked, according to the VNF packet information corresponding to the management domain of the secondary orchestrator, that the VNF does not exist and/or it is checked, according to the VNF packet information corresponding to the management domain of the secondary orchestrator, that the VNFD does not include the corresponding VNF external interface, the on-boarding the NSD corresponding to the management domain of the secondary orchestrator further includes: sending, to the sender, an on-board acknowledge (Acknowledge) command with a failure cause indication, where the on-board acknowledge command is used to indicate that the VNF packet in the VNF in the management domain of the secondary orchestrator does not exist and/or the corresponding VNFD does not include the corresponding VNF external interface; receiving a VNF packet on-boarding command from the sender; and on-boarding, according to the VNF packet on-boarding command, the VNF packet in the management domain of the secondary orchestrator. When on-boarding of the VNF packet is completed, it indicates that on-boarding of the NSD corresponding to the management domain of the secondary orchestrator is completed.

Refer to the foregoing embodiment for related descriptions of the process of on-boarding the VNF packet, and details are not described again in this embodiment.

It should further be noted that, after the NSD corresponding to the management domain of the secondary orchestrator is on-boarded, an NSD on-boarding complete notification message is fed back to the primary orchestrator.

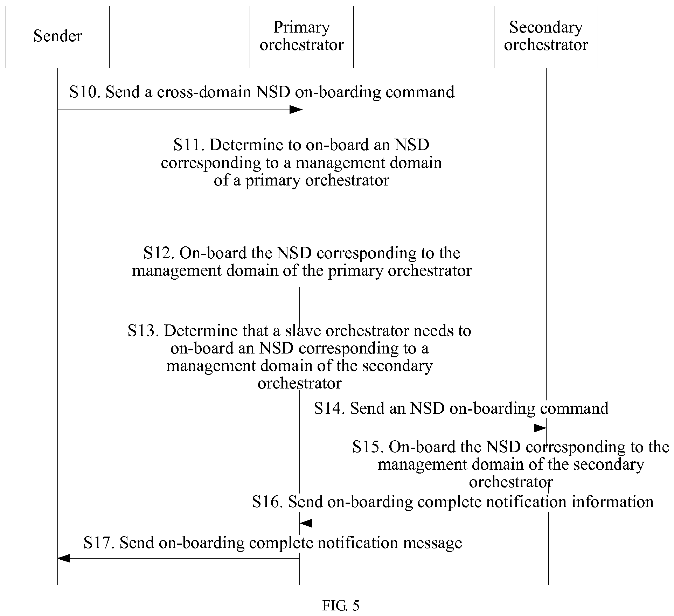

Referring to FIG. 5, FIG. 5 is a signaling diagram of a method for on-boarding a network service descriptor NSD disclosed in the present invention. The method includes:
S10. A sender sends a cross-domain NSD on-boarding command to a primary orchestrator.
S11. The primary orchestrator determines, according to the received cross-domain NSD on-boarding command, to on-board an NSD corresponding to a management domain of the primary orchestrator.
S12. The primary orchestrator on-boards the NSD corresponding to the management domain of the primary orchestrator.
S13. The primary orchestrator determines, according to the received cross-domain NSD on-boarding command, that a secondary orchestrator needs to on-board an NSD corresponding to a management domain of the secondary orchestrator.
S14. The primary orchestrator sends an NSD on-boarding command to the secondary orchestrator.
S15. The secondary orchestrator on-boards, according to the received NSD on-boarding command, the NSD corresponding to the management domain of the secondary orchestrator.
S16. After completing on-boarding the NSD corresponding to the management domain of the secondary orchestrator, the secondary orchestrator sends an on-boarding complete notification message to the primary orchestrator.
S17. After completing on-boarding the NSD corresponding to the management domain of the primary orchestrator, the primary orchestrator sends an on-boarding complete notification message to the sender.

It should be noted that, for specific implementation of each of the foregoing steps, refer to the descriptions of Embodiment 1 and Embodiment 2 of a method for on-boarding a network service descriptor NSD, and details are not described herein again.

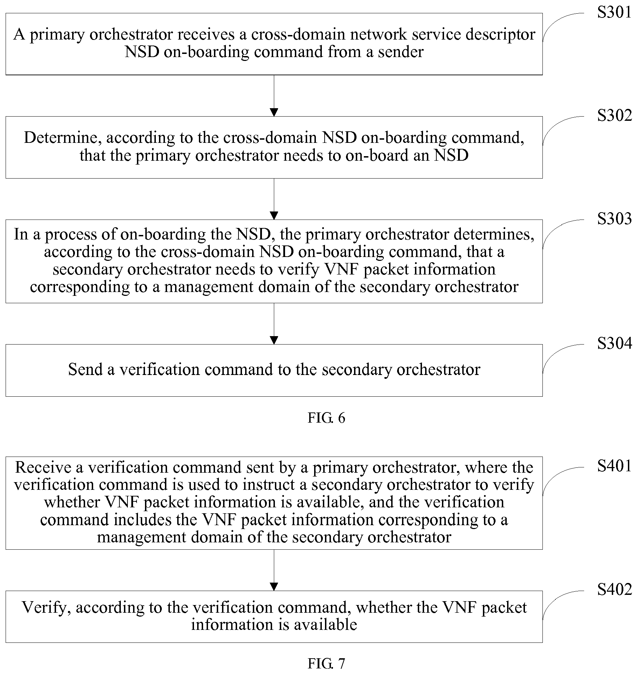

Referring to FIG. 6, FIG. 6 is a flowchart of Embodiment 3 of a method for on-boarding a network service descriptor NSD disclosed in the present invention. The method is applied to a primary orchestrator, and specifically includes the following steps:
S301. The primary orchestrator receives a cross-domain network service descriptor NSD on-boarding command from a sender.

The sender includes, but is not limited to, an OSS/a BSS of an operator.

The cross-domain NSD on-boarding command carries NSD information for describing an NS and VNF information.

S302. Determine, according to the cross-domain NSD on-boarding command, that the primary orchestrator needs to on-board an NSD.

Specifically, the NSD information and the VNF packet information corresponding to a management domain of the primary orchestrator that are used to describe the NS may be determined from the cross-domain NSD on-boarding command. Specifically, the NSD information is an NSD identifier, and the VNF information is a VNF package identifier.

S303. In a process of on-boarding the NSD, the primary orchestrator determines, according to the cross-domain NSD on-boarding command, that a secondary orchestrator needs to verify VNF packet information corresponding to a management domain of the secondary orchestrator.

The on-boarding the NSD by the primary orchestrator specifically includes: checking, according to the NSD information, whether a corresponding element exists; checking, according to the VNF packet information corresponding to the management domain of the primary orchestrator, whether a corresponding VNF packet exists; checking, according to the VNF packet information corresponding to the management domain of the primary orchestrator, whether a VNFD includes a corresponding VNF external interface; and when results of the three checks are all yes, notifying, by the primary orchestrator, an NSD catalog (catalog) to on-board the NSD into the catalog. In this case, the primary orchestrator completes on-boarding the NSD corresponding to the management domain of the primary orchestrator. When it is checked, according to the VNF packet information corresponding to the management domain of the primary orchestrator, that the VNF does not exist and/or it is checked, according to the VNF packet information corresponding to the management domain of the primary orchestrator, that the VNFD does not include the corresponding VNF external interface, the on-boarding, by the primary orchestrator, the NSD corresponding to the management domain of the primary orchestrator includes: sending, by the primary orchestrator to the sender, an on-board acknowledge (Acknowledge) command with a failure cause indication, where the on-board acknowledge command is used to notify the sender that the VNF packet in the VNF in the management domain of the primary orchestrator does not exist; receiving, by the primary orchestrator, a VNF packet on-boarding command from the sender; and on-boarding, by the primary orchestrator according to the VNF packet on-boarding command, the VNF packet in the VNF in the management domain of the primary orchestrator. In this case, the primary orchestrator completes on-boarding the NSD corresponding to the management domain of the primary orchestrator.

The determining, according to the cross-domain NSD on-boarding command, that a secondary orchestrator needs to verify VNF packet information corresponding to the management domain of the secondary orchestrator specifically includes: determining, according to the cross-domain NSD on-boarding command, a VNF packet identifier corresponding to the management domain of the secondary orchestrator.

S304. Send a verification command to the secondary orchestrator.

The verification command includes the VNF packet information corresponding to the management domain of the secondary orchestrator. The verification command is used to instruct the secondary orchestrator to verify whether the VNF packet information corresponding to the management domain of the secondary orchestrator is available. When the secondary orchestrator verifies that the VNF packet information is available, the secondary orchestrator feeds back a notification message indicating that the VNF packet information is available to the primary orchestrator, and the primary orchestrator receives the notification message indicating that the VNF packet information is available.

In S304, the sending a verification command to the secondary orchestrator specifically includes:
sending, to the secondary orchestrator, the verification command carrying the VNF packet identifier corresponding to the management domain of the secondary orchestrator, where the verification command carrying the VNF packet identifier corresponding to the management domain of the secondary orchestrator is used to instruct the secondary orchestrator to verify, according to the VNF packet identifier corresponding to the management domain of the secondary orchestrator, whether a VNF packet and an external interface that are in the management domain of the secondary orchestrator are available; and when the VNF packet and the external interface are available, feeding back, by the secondary orchestrator, the notification message indicating that the VNF packet information is available to the primary orchestrator, and receiving, by the primary orchestrator, the notification message indicating that the VNF packet information is available; or when the VNF packet and the external interface are unavailable, on-boarding, by the secondary orchestrator, a VNF packet corresponding to the management domain of the secondary orchestrator. Specifically, the secondary orchestrator feeds back a verification reply command indicating that the VNF packet information is unavailable to the primary orchestrator, and the primary orchestrator receives the verification reply command indicating that the VNF packet information is unavailable.

It should further be noted that, after S304, the method further includes:
receiving a VNF packet on-board acknowledge command that carries a success indication and that is fed back by the secondary orchestrator; and
after the NSD corresponding to the management domain of the primary orchestrator is on-boarded, sending a cross-domain NSD on-boarding complete notification message to the sender.

Referring to FIG. 7, FIG. 7 is a flowchart of Embodiment 4 of a method for on-boarding a network service descriptor NSD disclosed in the present invention. The method is applied to a secondary orchestrator, and specifically includes the following steps:
S401. Receive a verification command sent by a primary orchestrator.

The verification command is used to instruct the secondary orchestrator to verify whether VNF packet information corresponding to a management domain of the secondary orchestrator is available. The verification command includes the VNF packet information corresponding to the management domain of the secondary orchestrator.

S402. Verify, according to the verification command, whether the VNF packet information is available.

The verification command carries a VNF packet identifier corresponding to the management domain of the secondary orchestrator, and the verifying whether the VNF packet information is available includes:
verifying, according to the VNF packet identifier corresponding to the management domain of the secondary orchestrator, whether a VNF packet and an external interface in the management domain of the secondary orchestrator are available; and
when the VNF packet and the external interface are available, feeding back a notification message indicating that the VNF packet information is available to the primary orchestrator; or
when the VNF packet and the external interface are unavailable, on-boarding the VNF packet corresponding to the management domain of the secondary orchestrator.

Specifically, the verifying, according to the VNF packet identifier corresponding to the management domain of the secondary orchestrator, whether a VNF packet and an external interface in the management domain of the secondary orchestrator are available includes: checking, according to the VNF packet identifier corresponding to the management domain of the secondary orchestrator, whether a corresponding VNF exists; and checking, according to the VNF packet identifier corresponding to the management domain of the secondary orchestrator, whether a corresponding VNFD includes a corresponding VNF external interface.

When it is checked, according to the VNF packet identifier corresponding to the management domain of the secondary orchestrator, that the corresponding VNF packet does not exist, and/or it is checked, according to the VNF packet identifier corresponding to the management domain of the secondary orchestrator, that the corresponding VNFD does not include the corresponding VNF external interface, it indicates that the secondary orchestrator verifies that the VNF packet information is unavailable, and the secondary orchestrator needs to on-board the VNF packet corresponding to the management domain of the secondary orchestrator.

A process of on-boarding the VNF packet corresponding to the management domain of the secondary orchestrator by the secondary orchestrator specifically includes: feeding back a verification reply command to the primary orchestrator, where the verification reply command carries identifier information about one or more VNF packets that are unavailable in the management domain of the secondary orchestrator;
receiving a VNF packet on-boarding command from the primary orchestrator, where the VNF packet on-boarding command includes identifier information about a VNF packet needing to be on-boarded and metadata information about the VNF packet, where the metadata information about the VNF packet includes one or more of a VNF descriptor, VNF software image information, or VNF software version information; and
on-boarding, according to the VNF packet on-boarding command, the VNF packet in the management domain of the secondary orchestrator.

After the VNF packet in the management domain of the secondary orchestrator is on-boarded, the method further includes:
feeding back, to the primary orchestrator, a VNF packet on-board acknowledge command carrying a success indication.

When it is checked, according to the VNF packet identifier corresponding to the management domain of the secondary orchestrator, that the corresponding VNF packet exists, and/or it is checked, according to the VNF packet identifier corresponding to the management domain of the secondary orchestrator, that the corresponding VNFD includes the corresponding VNF external interface, it indicates that the secondary orchestrator verifies that the VNF packet information is available, and the secondary orchestrator feeds back a notification message indicating that the VNF packet information is available to the primary orchestrator.

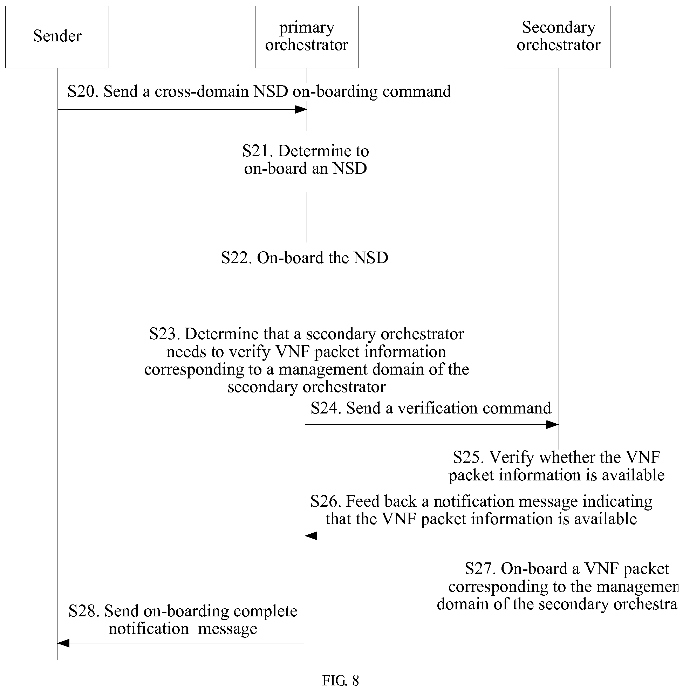

Referring to FIG. 8, FIG. 8 is a signaling diagram of a method for on-boarding a network service descriptor NSD disclosed in the present invention. The method includes:
S20. A sender sends a cross-domain NSD on-boarding command to a primary orchestrator.
S21. The primary orchestrator determines, according to the received cross-domain NSD on-boarding command, to on-board an NSD.
S22. The primary orchestrator on-boards the NSD.
S23. The primary orchestrator determines, according to the received cross-domain NSD on-boarding command, that a secondary orchestrator needs to verify VNF packet information corresponding to a management domain of the secondary orchestrator.
S24. The primary orchestrator sends a verification command to the secondary orchestrator.
S25. The secondary orchestrator verifies, according to the received verification command, whether the VNF packet information is available; and performs S26 when the VNF packet information is available; or performs S27 when the VNF packet information is unavailable.
S26. Feed back a notification message indicating that the VNF packet information is available to the primary orchestrator.
S27. On-board a VNF packet corresponding to the management domain of the secondary orchestrator.
S28. After the NSD corresponding to a management domain of the primary orchestrator is on-boarded, send a cross-domain NSD on-boarding complete notification message to the sender.

It should be noted that, refer to text descriptions corresponding to FIG. 6 and FIG. 7 for specific implementation of each of the foregoing steps, and details are not described herein again.

The method is described in detail in the foregoing embodiments disclosed in the present invention. The method may be implemented by using apparatuses in many forms. Therefore, the present invention further discloses an apparatus. The following provides specific embodiments to describe the apparatus in detail.

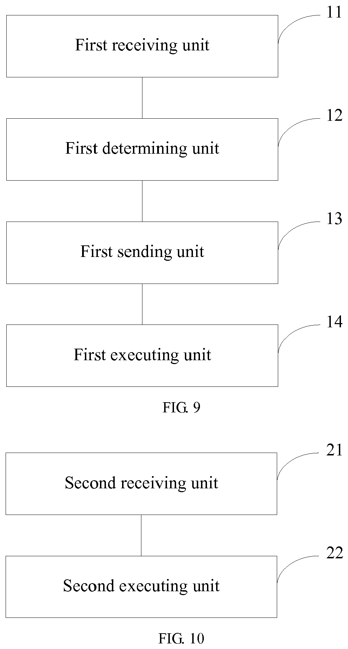

Referring to FIG. 9, FIG. 9 is a structural diagram of Embodiment 1 of an apparatus for on-boarding a network service descriptor NSD disclosed in the present invention. The apparatus may be a primary orchestrator, may be specifically an NFVO or an NSO, and specifically includes the following units:
a first receiving unit 11, configured to receive a cross-domain network service descriptor NSD on-boarding command from a sender;
a first determining unit 12, configured to: determine, according to the cross-domain NSD on-boarding command, that the primary orchestrator needs to on-board an NSD corresponding to a management domain of the primary orchestrator, and determine, according to the cross-domain NSD on-boarding command, that the secondary orchestrator needs to on-board an NSD corresponding to a management domain of the secondary orchestrator;
a first sending unit 13, configured to send an NSD on-boarding command to the secondary orchestrator, where the NSD on-boarding command is used to instruct the secondary orchestrator to on-board the NSD corresponding to the management domain of the secondary orchestrator; and
a first executing unit 14, configured to on-board the NSD corresponding to the management domain of the primary orchestrator by the primary orchestrator.

It should be noted that, the cross-domain NSD on-boarding command carries NSD information for describing a network service NS and VNF packet information, and the first determining unit 12 is specifically configured to:
determine, according to the cross-domain NSD on-boarding command, the NSD information and the VNF packet information that correspond to the management domain of the primary orchestrator.

The first determining unit 12 is specifically configured to:
determine, according to the cross-domain NSD on-boarding command, NSD information and VNF packet information that correspond to the management domain of the secondary orchestrator; and
the first sending unit is specifically configured to:
   send, to the secondary orchestrator, an NSD on-boarding command carrying the NSD information and the VNF packet information that correspond to the management domain of the secondary orchestrator.

The first determining unit 12 is specifically configured to:
determine, according to the cross-domain NSD on-boarding command, an NSD identifier and/or a VNF packet identifier that correspond/corresponds to the management domain of the secondary orchestrator; or
determine, according to the cross-domain NSD on-boarding command, an NSD identifier used to describe the NS, an identifier of the primary orchestrator, a correspondence between an identifier used to describe a VNF packet of the NS and the identifier of the primary orchestrator, and/or a correspondence between the identifier used to describe the VNF packet of the NS and an identifier of the secondary orchestrator.

The first receiving unit 11 is further configured to:
after the NSD on-boarding command is sent to the secondary orchestrator, receive an NSD on-boarding complete notification message fed back by the secondary orchestrator; and
the first sending unit is further configured to: after the NSD corresponding to the management domain of the primary orchestrator is on-boarded, send a cross-domain NSD on-boarding complete notification message to the sender.

Referring to FIG. 10, FIG. 10 is a structural diagram of Embodiment 2 of an apparatus for on-boarding a network service descriptor NSD disclosed in the present invention. The apparatus may be a secondary orchestrator, may be specifically an NFVO or an NSO, and specifically includes the following units:
a second receiving unit 21, configured to receive an NSD on-boarding command sent by a primary orchestrator, where the NSD on-boarding command is used to instruct the secondary orchestrator to on-board an NSD corresponding to a management domain of the secondary orchestrator; and
a second executing unit 22, configured to on-board, according to the NSD on-boarding command, the NSD corresponding to the management domain of the secondary orchestrator.

It should be noted that, the NSD on-boarding command carries NSD information and VNF packet information that correspond to the management domain of the secondary orchestrator.

The apparatus further includes:
a second sending unit, configured to: after the NSD corresponding to the management domain of the secondary orchestrator is on-boarded, feed back an NSD on-boarding complete notification message to the primary orchestrator.

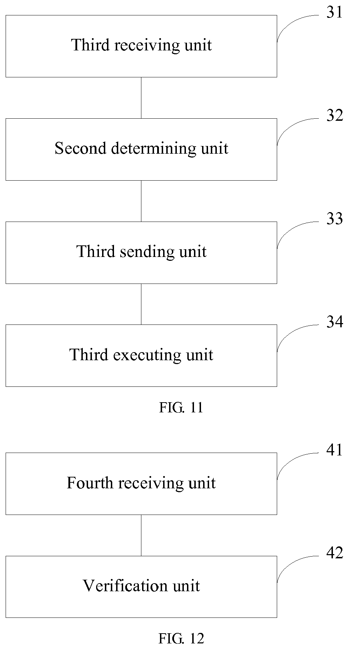

Referring to FIG. 11, FIG. 11 is a structural diagram of Embodiment 3 of an apparatus for on-boarding a network service descriptor NSD disclosed in the present invention. The apparatus may be a primary orchestrator, may be specifically an NFVO or an NSO, and specifically includes the following units:
a third receiving unit 31, configured to receive a cross-domain network service descriptor NSD on-boarding command from a sender;
a second determining unit 32, configured to: determine, according to the cross-domain NSD on-boarding command, that the primary orchestrator needs to on-board an NSD, and in a process of on-boarding the NSD by the primary orchestrator, determine, according to the cross-domain NSD on-boarding command, that a secondary orchestrator needs to verify VNF packet information corresponding to a management domain of the secondary orchestrator;
a third sending unit 33, configured to send a verification command to the secondary orchestrator, where the verification command is used to instruct the secondary orchestrator to verify whether the VNF packet information is available, and the verification command includes the VNF packet information corresponding to the management domain of the secondary orchestrator, wherein
the third receiving unit is further configured to receive a notification message indicating that the VNF packet information is available, where the notification message is fed back when the secondary orchestrator verifies that the VNF packet information is available; and
a third executing unit 34, configured to on-board the NSD.

It should be noted that, the cross-domain NSD on-boarding command carries NSD information for describing a network service NS and VNF packet information, and the second determining unit is specifically configured to:
determine, according to the cross-domain NSD on-boarding command, the NSD information and the VNF packet information corresponding to a management domain of the primary orchestrator that are used to describe the NS.

The third sending unit is specifically configured to:
send, to the secondary orchestrator, the verification command carrying a VNF packet identifier corresponding to the management domain of the secondary orchestrator, where the verification command carrying the VNF packet identifier corresponding to the management domain of the secondary orchestrator is used to instruct the secondary orchestrator to verify, according to the VNF packet identifier corresponding to the management domain of the secondary orchestrator, whether a VNF packet and an external interface in the management domain of the secondary orchestrator are available.

The third receiving unit is specifically configured to receive a notification message indicating that the VNF packet information is available, where the notification message is fed back when the secondary orchestrator verifies that the VNF packet and the external interface in the management domain of the secondary orchestrator are available; or receive a verification reply command indicating that the VNF packet information is unavailable, where the verification reply command is fed back when the secondary orchestrator verifies that the VNF packet and the external interface in the management domain of the secondary orchestrator are unavailable.

The third receiving unit is further configured to:
receive a VNF packet on-board acknowledge command that carries a success indication and that is fed back by the secondary orchestrator; and
the third sending unit is specifically configured to: after the NSD corresponding to the management domain of the primary orchestrator is on-boarded, send a cross-domain NSD on-boarding complete notification message to the sender.

Referring to FIG. 12, FIG. 12 is a structural diagram of Embodiment 4 of an apparatus for on-boarding a network service descriptor NSD disclosed in the present invention. The apparatus may be a secondary orchestrator, may be specifically an NFVO or an NSO, and specifically includes the following units:
a fourth receiving unit 41, configured to receive a verification command sent by a primary orchestrator, where the verification command is used to instruct the secondary orchestrator to verify whether VNF packet information is available, and the verification command includes the VNF packet information corresponding to a management domain of the secondary orchestrator; and
a verification unit 42, configured to verify, according to the verification command, whether the VNF packet information is available, where
when it is verified that the VNF packet information is available, a notification message indicating that the VNF packet information is available is fed back to the primary orchestrator.

It should be noted that, the verification command carries a VNF packet identifier corresponding to the management domain of the secondary orchestrator, and the verification unit is specifically configured to:
verify, according to the VNF packet identifier corresponding to the management domain of the secondary orchestrator, whether a VNF packet and an external interface in the management domain of the secondary orchestrator are available; and
when the VNF packet and the external interface are available, trigger a fourth sending unit to feed back a notification message indicating that the VNF packet information is available to the primary orchestrator; or
when the VNF packet and the external interface are unavailable, trigger a fourth executing unit to on-board a VNF packet corresponding to the management domain of the secondary orchestrator.

A fourth executing unit is specifically configured to:
feed back a verification reply command to the primary orchestrator, where the verification reply command carries identifier information about one or more VNF packets that are unavailable in the management domain of the secondary orchestrator;
receive a VNF packet on-boarding command from the primary orchestrator, where the VNF packet on-boarding command includes identifier information about a VNF packet needing to be on-boarded and metadata information about the VNF packet, the metadata information about the VNF packet including one or more of a VNF descriptor, VNF software image information, or VNF software version information; and
on-board, according to the VNF packet on-boarding command, the VNF packet in the management domain of the secondary orchestrator.

A fourth sending unit is further configured to feed back, to the primary orchestrator, a VNF packet on-board acknowledge command carrying a success indication.

It should further be noted that, specific function implementation of each unit in the apparatus embodiments (that is, embodiments corresponding to FIG. 9 to FIG. 12) is described in detail in the method embodiments (that is, embodiments corresponding to FIG. 3 to FIG. 8), and details are not described herein again.

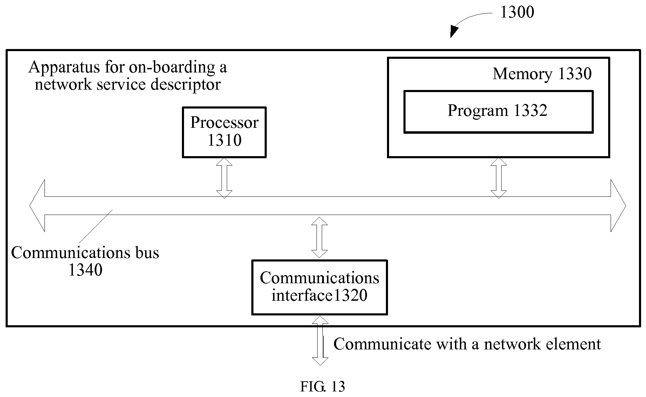

In addition, an embodiment of this application further provides an apparatus for on-boarding a network service descriptor. FIG. 13 is a structural diagram of an apparatus for on-boarding a network service descriptor according to this application. As shown in FIG. 13, the apparatus 1300 for on-boarding a network service descriptor includes:
a processor (processor) 1310, a communications interface (Communications Interface) 1320, a memory (memory) 1330, and a bus 1340.

The processor 1310, the communications interface 1320, and the memory 1330 communicate with each other by using the bus 1340.

The processor 1310 is configured to execute a program 1332.

Specifically, the program 1332 may include program code, and the program code includes a computer operation instruction.

The processor 1310 may be a central processing unit CPU, or an application-specific integrated circuit ASIC (Application Specific Integrated Circuit), or one or more integrated circuits configured to implement the embodiments of this application.

The memory 1330 is configured to store the program 1332. The memory 1330 may include a high-speed RAM memory, and may further include a non-volatile memory (non-volatile memory), such as at least one magnetic disk memory. An instruction stored in the memory 1330 may enable the processor 1310 to perform the method in Embodiments 1 to 4.

Optionally, the apparatus for on-boarding a network service descriptor may be a primary orchestrator. The instruction stored in the memory 1330 may enable the processor 1310 to perform the following operations:
obtaining, by using the communications interface 1320, a cross-domain network service descriptor NSD on-boarding command sent by a sender;
determining, according to the cross-domain NSD on-boarding command, that a secondary orchestrator needs to on-board an NSD corresponding to a management domain of the secondary orchestrator; and
sending an NSD on-boarding command to the secondary orchestrator by using the communications interface 1320, where the NSD on-boarding command is used to instruct the secondary orchestrator to on-board the NSD corresponding to the management domain of the secondary orchestrator, where
the apparatus for on-boarding a network service descriptor and the secondary orchestrator have different management domains respectively.

Optionally, the apparatus for on-boarding a network service descriptor may be a secondary orchestrator. The instruction stored in the memory 1330 may enable the processor 1310 to perform the following operations:
obtaining, by using the communications interface 1320, an NSD on-boarding command sent by a primary orchestrator, where the NSD on-boarding command is used to instruct the secondary orchestrator to on-board an NSD corresponding to a management domain of the secondary orchestrator; and
on-boarding, according to the NSD on-boarding command, the NSD corresponding to the management domain of the secondary orchestrator.

Optionally, the apparatus for on-boarding a network service descriptor may be a primary orchestrator. The instruction stored in the memory 1330 may enable the processor 1310 to perform the following operations:
obtaining, by using the communications interface 1320, a cross-domain network service descriptor NSD on-boarding command sent by a sender;
determining, according to the cross-domain NSD on-boarding command, that the primary orchestrator needs to on-board an NSD;
in a process of on-boarding the NSD by the primary orchestrator, determining, according to the cross-domain NSD on-boarding command, that a secondary orchestrator needs to verify VNF packet information corresponding to a management domain of the secondary orchestrator;
sending a verification command to the secondary orchestrator by using the communications interface 1320, where the verification command is used to instruct the secondary orchestrator to verify whether the VNF packet information corresponding to the management domain of the secondary orchestrator is available, and the verification command includes the VNF packet information.
receiving, by using the communications interface 1320, a notification message indicating that the VNF packet information is available, where the notification message is fed back when the secondary orchestrator verifies that the VNF packet information is available.

Optionally, the apparatus for on-boarding a network service descriptor may be a secondary orchestrator. The instruction stored in the memory 1330 may enable the processor 1310 to perform the following operations:
obtaining, by using the communications interface 1320, a verification command sent by a primary orchestrator, where the verification command is used to instruct the secondary orchestrator to verify whether VNF packet information corresponding to a management domain of the secondary orchestrator is available, and the verification command includes the VNF packet information corresponding to the management domain of the secondary orchestrator;
verifying, according to the verification command, whether the VNF packet information is available; and
when it is verified that the VNF packet information is available, feeding back, by using the communications interface 1320, a notification message indicating that the VNF packet information is available.

The embodiments in this specification are all described in a progressive manner, for same or similar parts in the embodiments, refer to these embodiments, and each embodiment focuses on a difference from other embodiments. The apparatus disclosed in the embodiments is described relatively simply because it corresponds to the method disclosed in the embodiments, and for portions related to those of the method, refer to the description of the method.

A person skilled in the art may further be aware that, in combination with the examples described in the embodiments disclosed in this specification, units and algorithm steps may be implemented by electronic hardware or a combination of computer software and electronic hardware. To clearly describe the interchangeability between the hardware and the software, the foregoing has generally described compositions and steps of each example according to functions. Whether the functions are performed by hardware or software and hardware depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, method or algorithm steps may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The embodiments disclosed above are described to enable a person skilled in the art to implement or use the present invention. Various modifications to the embodiments are obvious to the person skilled in the art, and general principles defined in this specification may be implemented in other embodiments without departing from the scope of the present invention. Therefore, the present invention will not be limited to the embodiments described in this specification but extends to the widest scope that complies with the appended claims.

## Claims

1. A method for on-boarding a network service descriptor, wherein the method comprises:
• receiving, by a primary orchestrator, a cross-domain network service descriptor, NSD, on-boarding command from a sender (S101),
• determining, by the primary orchestrator, according to the cross-domain NSD on-boarding command an NSD identifier that corresponds to a management domain of a secondary orchestrator,
determining, by the primary orchestrator, according to the cross-domain NSD on-boarding command, a virtualized network function, VNF, packet identifier that corresponds to the management domain of the secondary orchestrator, wherein by the determination of the NSD identifier corresponding to the management domain of the secondary orchestrator together with the determination of the VNF packet identifier corresponding to the management domain of the secondary orchestrator it is determined that the secondary orchestrator needs to on-board the NSD corresponding to the management domain of the secondary orchestrator,
• sending, by the primary orchestrator, to the secondary orchestrator a NSD on-boarding command carrying the determined NSD identifier and the determined VNF packet identifier that correspond to the management domain of the secondary orchestrator, wherein the NSD on-boarding command is used to instruct the secondary orchestrator to on-board the NSD corresponding to the NDS identifier (S105),
wherein a management domain of the primary orchestrator is different from the management domain of the secondary orchestrator.

2. The method according to claim 1, wherein the method further comprises:
determining, by the primary orchestrator, according to the cross-domain NSD on-boarding command that the primary orchestrator needs to on-board an NSD corresponding to the management domain of the primary orchestrator.

3. The method according to claim 2, wherein after the sending the NSD on-boarding command to the secondary orchestrator, the method further comprises:
receiving an NSD on-boarding complete notification message fed back by the secondary orchestrator; and
after the NSD corresponding to the management domain of the primary orchestrator is on-boarded, sending a cross-domain NSD on-boarding complete notification message to the sender.

4. The method according to any one of claims 1 to 3, wherein the primary orchestrator is a network function virtualization orchestrator or a network service orchestrator, and the secondary orchestrator is a network function virtualization orchestrator or a network service orchestrator.

5. An apparatus for on-boarding a network service descriptor, wherein the apparatus is configured to perform any of the methods according to claims 1-4.

6. A computer readable storage medium storing a program to be executed by a processor, the program comprising instructions, which when executed by the processor, cause the processor to carry out the method in any one of claims 1 to 4.

## Patentansprüche

1. Verfahren zum Integrieren eines Netzwerkdienstdeskriptors, wobei das Verfahren umfasst:
• Empfangen, durch einen primären Orchestrator, eines Befehls zum Integrieren eines domänenübergreifenden Netzwerkdienstdeskriptors, NSD (S101),
• Bestimmen, durch den primären Orchestrator, gemäß dem Befehl zum Integrieren eines domänenübergreifenden NSD, eines NSD-Identifikators, der einer Verwaltungsdomäne eines sekundären Orchestrators entspricht,
Bestimmen, durch den primären Orchestrator, gemäß dem Befehl zum Integrieren des domänenübergreifenden NSD, eines Identifikators eines Pakets einer virtualisierten Netzwerkfunktion, VNF, welcher der Verwaltungsdomäne des sekundären Orchestrators entspricht,
wobei durch die Bestimmung des NSD-Identifikators, welcher der Verwaltungsdomäne des sekundären Orchestrators entspricht, zusammen mit der Bestimmung des VNF-Paket-Identifikators, welcher der Verwaltungsdomäne des sekundären Orchestrators entspricht, bestimmt wird, dass der sekundäre Orchestrator den NSD integrieren muss, welcher der Verwaltungsdomäne des sekundären Orchestrators entspricht,
• Senden, durch den primären Orchestrator, an den sekundären Orchestrator, eines NSD-Integrationsbefehls, welcher den bestimmten NSD-Identifikator und den bestimmten VNF-Paket-Identifikator enthält, welcher der Verwaltungsdomäne des sekundären Orchestrators entspricht, wobei der NSD-Integrationsbefehl verwendet wird, um den sekundären Orchestrator anzuweisen, den NSD zu integrieren, welcher dem NDS-Identifikator entspricht (S105),
wobei sich eine Verwaltungsdomäne des primären Orchestrators von der Verwaltungsdomäne des sekundären Orchestrators unterscheidet.

2. Verfahren nach Anspruch 1, wobei das Verfahren ferner umfasst:
Bestimmen, durch den primären Orchestrator, gemäß dem Befehl zum Integrieren des domänenübergreifenden NSD, dass der primäre Orchestrator einen NSD integrieren muss, welcher der Verwaltungsdomäne des primären Orchestrators entspricht.

3. Verfahren nach Anspruch 2, wobei nach dem Senden des NSD-Integrationsbefehls an den sekundären Orchestrator das Verfahren ferner umfasst:
Empfangen einer Nachricht zur Bekanntgabe der Vollendung der Integration des NSD, die durch den sekundären Orchestrator rückgemeldet wurde; und
nachdem der NSD, welcher der Verwaltungsdomäne des primären Orchestrators entspricht, integriert wurde, Senden einer Nachricht zur Bekanntgabe der Vollendung der Integration des domänenübergreifenden NSD an den Sender.

4. Verfahren nach einem der Ansprüche 1 bis 3, wobei der primäre Orchestrator ein Netzwerkfunktionsvirtualisierungs-Orchestrator oder ein Netzwerkdienst-Orchestrator ist und der sekundäre Orchestrator ein Netzwerkfunktionsvirtualisierungs-Orchestrator oder ein Netzwerkdienst-Orchestrator ist.

5. Vorrichtung zum Integrieren eines Netzwerkdienstdeskriptors, wobei die Vorrichtung dafür ausgelegt ist, eines der Verfahren nach den Ansprüchen 1 bis 4 durchzuführen.

6. Computerlesbares Speichermedium, in dem ein Programm gespeichert ist, das durch einen Prozessor auszuführen ist, wobei das Programm Anweisungen umfasst, die, wenn sie durch den Prozessor ausgeführt werden, den Prozessor veranlassen, das Verfahren nach einem der Ansprüche 1 bis 4 durchzuführen.

## Revendications

1. Procédé pour embarquer un descripteur de service réseau, le procédé consistant :
à recevoir, au moyen d'un orchestrateur primaire, une instruction d'embarquement de descripteur de service réseau (NSD) inter-domaine, en provenance d'un expéditeur (S101),
à déterminer, au moyen de l'orchestrateur primaire, en fonction de l'instruction d'embarquement de descripteur NSD inter-domaine, un identifiant de descripteur NSD qui correspond à un domaine de gestion d'un orchestrateur secondaire,
à déterminer, au moyen de l'orchestrateur primaire, en fonction de l'instruction d'embarquement de descripteur NSD inter-domaine, un identifiant de paquet de fonction réseau virtualisée (VNF) qui correspond au domaine de gestion de l'orchestrateur secondaire,
dans lequel, par la détermination de l'identifiant de descripteur NSD correspondant au domaine de gestion de l'orchestrateur secondaire conjointement avec la détermination de l'identifiant de paquet de fonction VNF correspondant au domaine de gestion de l'orchestrateur secondaire, il est déterminé que l'orchestrateur secondaire doit embarquer le descripteur NSD correspondant au domaine de gestion de l'orchestrateur secondaire,
à envoyer, au moyen de l'orchestrateur primaire, à l'orchestrateur secondaire, une instruction d'embarquement de descripteur NSD comportant l'identifiant de descripteur NSD déterminé et l'identifiant de paquet de fonction VNF déterminé qui correspondant au domaine de gestion de l'orchestrateur secondaire, l'instruction d'embarquement de descripteur NSD étant utilisée pour donner comme instruction à l'orchestrateur secondaire d'embarquer le descripteur NSD correspondant à l'identifiant de descripteur NDS (S 105),
dans lequel un domaine de gestion de l'orchestrateur primaire est différent du domaine de gestion de l'orchestrateur secondaire.

2. Procédé selon la revendication 1 le procédé consistant en outre :
à déterminer, au moyen de l'orchestrateur primaire, en fonction de l'instruction d'embarquement de descripteur NSD inter-domaines que l'orchestrateur primaire doit embarquer un descripteur NSD correspondant au domaine de gestion de l'orchestrateur primaire.

3. Procédé selon la revendication 2, le procédé consistant en outre, après l'envoi de l'instruction d'embarquement de descripteur NSD à l'orchestrateur secondaire :
à recevoir un message de notification de fin d'embarquement de descripteur NSD renvoyé par l'orchestrateur secondaire ; et
après que le descripteur NSD correspondant au domaine de gestion de l'orchestrateur primaire est embarqué, à envoyer un message de notification de fin d'embarquement de descripteur NSD inter-domaines à l'expéditeur.

4. Procédé selon l'une quelconque des revendications 1 à 3, dans lequel l'orchestrateur primaire est un orchestrateur de virtualisation de fonction réseau ou un orchestrateur de service réseau et l'orchestrateur secondaire est un orchestrateur de virtualisation de fonction réseau ou un orchestrateur de service réseau.

5. Appareil pour embarquer un descripteur de service réseau, dans lequel l'appareil est configuré pour réaliser l'un quelconque des procédés selon les revendications 1 à 4.

6. Support de stockage lisible par ordinateur stockant un programme qui doit être exécuté par un processeur, le programme comprenant des instructions qui, lorsqu'elles sont exécutées par le processeur, contraignent le processeur à mettre en oeuvre le procédé selon l'une quelconque des revendications 1 à 4.
